(19) Europäisches Patentamt
European Patent Office
Office européen des brevets

(11) EP 4 790 567 A1

(12) **EUROPEAN PATENT APPLICATION**

(43) Date of publication:
**12.08.2026 Bulletin 2026/33**

(21) Application number: **26153898.7**

(22) Date of filing: **23.01.2026**

(51) International Patent Classification (IPC):
***G06F 16/2455*** *(2019.01)* ***G06F 16/25*** *(2019.01)*

(52) Cooperative Patent Classification (CPC):
**G06F 16/24568; G06F 16/254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 US 202563755359 P**
**15.12.2025 US 202519419540**

(71) Applicant: **Dynatrace LLC**
**Boston, Massachusetts 02210 (US)**

(72) Inventor: **SHAMOV-LIIVER, Juri**
**Tallinn (EE)**

(74) Representative: **Steffens, Adrian**
**Boehmert & Boehmert**
**Anwaltspartnerschaft mbB**
**Pettenkoferstraße 22**
**80336 München (DE)**

# (54) CONTEXT AWARE DATA EXTRACTION FROM TEXTUAL RECORDS

(57) The disclosure relates to a computer-implemented method for extracting data from textual records. The technical problems solved by the disclosure are i) to generate an extraction pattern for extracting a selected data field from a reference record, ii) to improve the robustness of the extraction pattern by reducing its length, and iii) to extract the selected field from a set of records. The solution comprises determining whether the extraction pattern is disjoint to any segment of the preceding pattern; forming a new extraction pattern by inserting the data type for last data field in the preceding pattern at the beginning of the extraction pattern; and repeating the previous steps with the new extraction pattern until the new extraction pattern is disjoint to all segment comprising the preceding pattern. (Fig. 6)

Fig. 6
600
Start
610
Receive reference record
620
Receive selected data field in reference record
630
Identify data types of data fields in reference record
640
Form preceding pattern
650
Form extraction pattern
660
Extraction pattern is disjoint to all segments of preceding pattern
NO
YES
670
Extraction pattern = {Last expression in preceding pattern, extraction pattern}
680
Form optimized extraction pattern
690
End

EP 4 790 567 A1

## Description

Field

The present disclosure relates to a computer-implemented method for extracting data from textual records.

Background

Composing an extraction pattern matching expressions is difficult for end-users who do not do this on a regular basis. The regular expression syntax is notoriously difficult to learn and even with the more user-friendly syntax of specialized pattern matching languages, such as the Dynatrace Pattern Language DPL, the initial learning curve is steep. At the same time, users often need to extract only one or two fields from records.

This section provides background information related to the present disclosure which is not necessarily prior art.

Summary

A method is presented for automatic generation of extraction patterns for extracting a user selected part from a string type data record. It addresses both problems described above. On the one hand, the end-user may generate extraction patterns from different selections to learn how patterns extracting different parts of message are built. On the other hand, the method will generate an optimized extraction pattern therefore saving time and effort for the end-user.

Generating an extraction pattern which is:

1. intended to extract a field from a series of textual data records, and
2. is based on only one reference record,

is not trivial, since the requirements are orthogonal. The generated pattern must be sufficiently specific to extract the selected part from the reference record but at the same time, sufficiently generic to follow the underlying structure in order to extract the same field from a set of records in the dataset. In a strict sense, it is impossible to learn the complete structure of tabulated data records based on just one sample, therefore we must not expect that the generated extraction patterns to be perfect. An example of such an extreme but often occurring case is the Linux syslog where the record is simply a free text. Obviously, when dealing with semi-structured records the generated pattern has much higher chance to match the rest of the records.

The objective of the disclosure is to come up with a computer-implemented method for extracting data from textual records, which i) creates an extraction pattern for extracting a selected data field from a reference record, ii) improves the robustness of the extraction pattern by reducing its length, and iii) extracts the selected field from a set of records. The creation, optimization, and extraction of the selected field from a set of records shall be performed fully automatically. By using the disclosed method, the user shall be able to generate optimized extraction patterns and to automatically extract the selected field from records.

According to a first aspect of the disclosure, the technical problem is solved by a computer-implemented method for extracting data from textual records according to claim 1. Advantageous embodiments are described in the dependent claims.

The objective is solved by a computer-implemented method for extracting data from textual records, comprising: a) receiving, by a computer processor, a reference record; b) receiving, by the computer processor, a selection of a data field in the reference record; c) identifying, by the computer processor, data types of data fields comprising the reference record; d) forming, by the computer processor, a preceding pattern of data types, where the preceding pattern is formed from the data types of the data fields preceding the selected data field in the reference record; e) forming, by the computer processor, an extraction pattern of data types, where the extraction pattern is formed from the data type of the selected data field and data types for at least one additional data field following the selected data field in the reference record; f) determining, by the computer processor, whether the extraction pattern is disjoint to any segment of the preceding pattern, where each segment is comprised of sequential data types in the preceding pattern and has same length as the extraction pattern; g) inserting, by the computer processor, the data type for last data field in the preceding pattern at the beginning of the extraction pattern to form a new extraction pattern; h) repeating steps f) and g) with the new extraction pattern until a determination is made that the new extraction pattern is disjoint to any segment comprising the preceding pattern; and i) forming an optimized extraction pattern from the new extraction pattern in response to a determination that the new extraction pattern is disjoint to any segment comprising the preceding pattern.

The generation of the extraction pattern is based on a single reference record, which is received in step a. In step b, the computer processor receives a selected data field in the reference record. Selecting the data field is typically done by the user, e.g., using a pointing device. In step c, the processor identifies the data types of the data fields in the reference

record. In step d, the processor forms a preceding pattern of data types, where the preceding pattern is formed by the ordered concatenation of data types of the data fields preceding the selected data field in the reference record. In the next step, the processor forms an extraction pattern by concatenating the data type of the selected data field and data types for at least one additional data field following the selected data field in the reference record. In step f, the processor determines whether the extraction pattern is disjoint to any segment of the preceding pattern, where each segment is comprised of sequential data types in the preceding pattern and has the same length as the extraction pattern. Next, a new extraction pattern is formed by inserting the data type of the last data field in the preceding pattern at the beginning of the extraction pattern. By doing this, the length of the new extraction pattern is the length of the extraction pattern plus 1. The steps f) and g) are repeated with the new extraction pattern until the processor determines that the new extraction pattern is disjoint to any and all segments comprising the preceding pattern. Upon ascertaining that the new extraction pattern is disjoint to all segments comprised in the preceding pattern, an optimized extraction pattern is formed from the new extraction pattern.

In a preferred embodiment, the processor receives a plurality of text records and data is extracted from the plurality of text records using the optimized extraction pattern. In order to extract data from a text record, the optimized extraction pattern is applied to the text record.

Typically, identifying data types of data fields comprise identifying a data type for each field starting with a first data field in the reference record to a data field immediately following the selected data field.

In a preferred embodiment, identifying data types of data fields includes matching data fields in the reference record and assigning a data type to a given data field in the reference record, where the assigned data type is selected from a predefined list or table of data types.

Forming the preceding pattern of data types may include concatenating data types together in order of occurrence in the reference record starting with a first data field up to the selected data field.

Advantageously, determining whether the extraction pattern is disjoint to any segment of the preceding pattern includes comparing the ordered sequence of data types comprising the extraction pattern to sequences of data types comprising each segment in the preceding pattern.

Preferably, forming an optimized extraction pattern is done by prepending a wildcard expression to the new extraction pattern, where the wildcard expression is a universal data type with an arbitrary length.

According to a second aspect of the disclosure, the technical problem is also solved by a computer-implemented method for extracting data from textual records according to another claim. Advantageous embodiments are described in the dependent claims.

The objective is solved by a computer-implemented method for extracting data from textual records, comprising: receiving, by a computer processor, a reference record; receiving a selection for a selected data field in the reference record; identifying, by the computer processor, the data type of the selected data field; for each other data field in the reference record from the first data field to the data field preceding the selected data field, and for the data field immediately following the selected data field: identifying, by the computer processor, the data type of the other data field; forming, by the computer processor, an extraction pattern, ExPat, by concatenating the identified data types in order of occurrence in the reference record; splitting the extraction pattern, ExPat, into a first part, Rp, and a second part, Rt, where the first part, Rp, comprises data types from the beginning of the extraction pattern to the data type of the data field preceding the selected data field, and the second part, Rt, comprises the remaining data types in the extraction pattern, ExPat; identifying the number of expressions in the first part, Rp, and assigning the number of expressions in the first part to n, $n=|Rp|$; if the first part, Rp, contains more expressions than the second part, Rt: reducing the length of the extraction pattern, ExPat, by iteratively performing: a) inserting the n-th element of the first part, Rp, at the beginning of the second part, Rt, thereby incrementing the length of Rt by 1; b) for all ordered subsets, Rc, of the first part, Rp, containing the same number of expressions as the second part, Rt: checking, by the computer processor, whether the subset, Rc, is disjoint to the second part, Rt; and c) if at least one subset, Rc, of the first part, Rp, is not disjoint to the second part, Rt: decrement n by 1, $n = n-1$, and perform the next iteration, else exit the iteration; forming, by the computer processor, an optimized extraction pattern, ExPat*, by concatenating DATA*, '(', Rt, and ')', where DATA* is a first expression of arbitrary length including zero having the universal data type DATA, and Rt comprises the ordered sequence of data types in the second part, Rt; and for each textual data record: extracting data from the textual data record by applying the optimized extraction pattern, ExPat*, to the textual data record.

In a preferred embodiment, identifying the data type of the selected data field further comprises: comparing the format of the selected data field to a table of formats of data types, where the comparison starts at the top of the table, and in case a format does not match, the next following entry in the table is checked.

According to another very preferred embodiment, identifying the data type of the selected data field includes: identifying whether the reference record contains a JSON object; if a JSON object is contained in the record, ascertaining whether the selected data field is contained in the JSON object; and if the selected data field is contained in the JSON object, assigning the data type JSON to the selected field.

According to another very preferred embodiment, identifying the data type of the selected data field includes: identifying whether the reference record contains a key-value-pair object, KVP; if a KVP object is contained in the record,

ascertaining whether the selected data field is contained in the KVP object; and if the selected data field is contained in the KVP object, assigning the data type KVP to the selected field.

Since JSON objects and KVP objects are found frequently in data records from up-to-date systems, supporting these dynamically allocated objects is a great help for users.

In case of the selected data field, the default data type STRING is assigned upon ascertaining that no format in the table of formats of data types matches the format of the selected data field.

It may be provided that the default data type STRING is assigned to the selected data field upon ascertaining that no format in the table of formats of data types matches the format of the selected data field.

Preferably, identifying the data type of the other data field further comprises: comparing the format of the other data field to a table of formats of data types, where the comparison starts at the top of the table, and in case a format does not match, the next following entry in the table is checked.

In case of other data fields, the default data type character group CG is assigned to another data field upon ascertaining that no format in the table of formats of data types matches the format of the other data field.

Since JSON objects and KVP objects are dynamically allocated objects, extracting data from the data record preferably includes: if the extracted data is a JSON object or a KVP object, extracting a key-value pair from the JSON object or the KVP object.

Preferably, extracting data from the data record includes: assigning the extracted data to a variable and storing the variable in a database. This allows the post-processing of extracted data by storing the variable in a database. Preferably, the variable is stored in the database in the format of the data type of the selected data field.

According to a third aspect of the disclosure, the technical problem is also solved by a non-transitory computer-readable medium having computer-executable instructions that, upon execution of the instructions by a processor of a computer, cause the computer to: a) receive a reference record; b) receive a selection of a data field in the reference record; c) identify data types of data fields comprising the reference record; d) form a preceding pattern of data types, where the preceding pattern is formed from the data types of the data fields preceding the selected data field in the reference record; e) form an extraction pattern of data types, where the extraction pattern is formed from the data type of the selected data field and data types for at least one additional data field following the selected data field in the reference record; f) determine whether the extraction pattern is disjoint to any segment of the preceding pattern, where each segment is comprised of sequential data types in the preceding pattern and has same length as the extraction pattern; g) insert the data type for last data field in the preceding pattern at the beginning of the extraction pattern to form a new extraction pattern; h) repeat steps f) and g) with the new extraction pattern until a determination is made that the new extraction pattern is disjoint to any segment comprising the preceding pattern; and i) form an optimized extraction pattern from the new extraction pattern in response to a determination that the new extraction pattern is disjoint to any segment comprising the preceding pattern.

Further areas of applicability will become apparent from the description provided herein. The description and specific examples in this summary are intended for purposes of illustration only and are not intended to limit the scope of the present disclosure.

## Drawings

The drawings described herein are for illustrative purposes only of selected embodiments and not all possible implementations and are not intended to limit the scope of the present disclosure.

| | |
|---|---|
| FIG. 1 | shows a reference record R1 and three other records R2 to R4 used in the first to fourth application examples, |
| FIG. 1a | shows the process of selecting a field 110 from the reference record R1 with a pointing device 120, |
| FIG. 2 | shows a reference record R10 used in a 5th application example, |
| FIG. 3 | shows a reference record R20 used in a 6th application example, |
| FIG. 3a | shows the process of selecting a field 310 from the reference record R20 with the pointing device 120, |
| FIG. 4 | shows the JSON object extracted in the 6th application example, |
| FIG. 5 | shows a reference record R30 used in the 7th application example, |
| FIG. 5a | shows the process of selecting a field 510 from the reference record R30 with the pointing device 120, |
| FIGs. 6 and 7 | show flow charts for the main steps in claims 1 and 8, respectively, and |
| FIG. 8 | shows the collection of APM data in a distributed computing environment. |

Corresponding reference numerals indicate corresponding parts throughout the several views of the drawings.

Detailed description

Example embodiments will now be described more fully with reference to the accompanying drawings.

In a distributed computing environment, multiple entities are linked together by a network allowing communication between the entities. The operating systems of computing entities, applications running on the computing entities, computing hosts and computing containers etc. connected to the computing entities, produce application performance and monitoring (short APM) data, such as log data, span- and trace-data, metrics data etc. thereby documenting the processing of data in the computing environment. In addition, network entities, such as routers, firewalls, switches etc. produce APM data too. Since APM data originates at different entities, applications and types of devices, APM data is very inhomogeneous. In order to allow the analysis of APM data, APM data is generally generated in textual form thus allowing humans - at least in principle - to understand the data.

Since critical events occurring in the computing environment are in many cases not detected in real time, APM data is stored in a database to allow the analysis at a later date. E.g., an attack by a rogue party to the computing environment may be detected only after data is stolen, modified or deleted in the computing environment. In order to understand how the attacker managed to access the computing system, detailed analysis of APM data is necessary.

Although APM data is generated as text, the data is typically not stored in textual form in the database. E.g., the textual timestamp

2023-11-25T20:01:43.554PST

is typically not stored in the database as text but e.g., as a Unix timestamp 1700971303, effectively reducing the 26 bytes from the textual timestamp to a LONG of 4 bytes. Storing data in non-textual formats applies not only to timestamps, but also to integers, doubles, Boolean expressions etc.

Thus, there is not just a need to extract correct data fields from textual records but also to assign the extracted fields to correct data types. For many operating systems, applications etc. the format of produced APM data is known a priori. E.g., the Apache log message

'[Fri Sep 09 10:42:29.902022 2011] [core:error] [pid 35708:tid 4328636416] [client 72.15.99.187] File does not exist: /usr/local/apache2/htdocs/fav.ico'

contains the timestamp [Fri Sep 09 10:42:29.902022 2011], the Log Level [core:error], the Process ID (pid) and Thread ID (tid) [pid 35708:tid 4328636416], the Client IP address [client 72.15.99.187], and the Error Message 'File does not exist: /usr/local/apache2/htdocs/fav.ico'.

In many other cases, the format of APM data, even from known sources, may have various different formats, e.g., depending on the log level of data (error log, info log, trace message, warning message etc.) and depending on the system configuration. In the disclosure it is assumed that the best fitting or most appropriate pattern for extracting data from APM data, such as log messages, is unknown and an appropriate pattern shall be found.

In a first application example, extracting data from a reference record R1

R1= '2023-09-24 16:43:59 4.39.237.73 "Mozilla/5.0 (X11; Linux x86_64; rv:102.0) 020 " 200 10348'

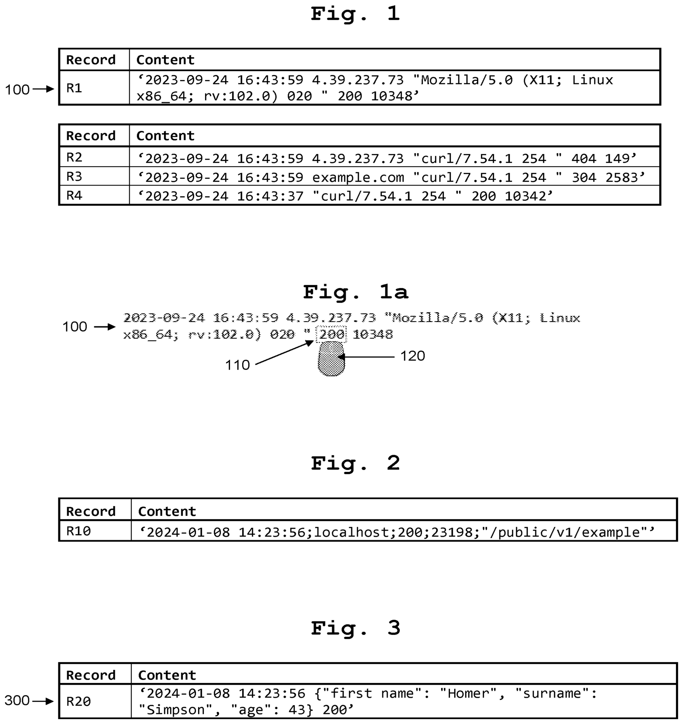

according to a simple method is shown. It is assumed that the user wants to extract the field 110 containing the HTTP status code '200' from the reference record R1, e.g., by selecting the field 110 with a pointing device 120 before data extraction (see Fig. 1a).

In order to check the robustness of data extraction, three other records R2, R3 and R4 are used:

R2= '2023-09-24 16:43:59 4.39.237.73 "curl/7.54.1 254 " 404 149'
R3= '2023-09-24 16:43:59 example.com "curl/7.54.1 254 " 304 2583'
R4= '2023-09-24 16:43:37 "curl/7.54.1 254 " 200 10342'

The other records are similar but not identical to R1 and comprise records that may be expected to be generated by systems generating the reference record. The reference record R1 and the other records R2, R3 and R4 in Fig. 1 are textual records, i.e., they contain text only.

The main structural differences between R1 and the other records R2 to R4 are:

R2: different string in inverted commas " "
R3: the web site's address is not an IP address but a domain name
R4: no IP address or domain name given

In the first application example it is assumed that fields within a record are separated by whitespaces/blanks. Thus, contiguous data fields are separated by separators. Additionally, only the order of data fields in the record not the data types of fields is considered for data extraction. In a first step, the reference record R1 is split by separators into fields without considering the specific data types of the fields. In this application example, the data type DATA is a universal data type, i.e., it can contain any data. Separators are denoted S.

Splitting the original record R1 by separators S identifies the following data fields including separators:

*Tab. 1 Identified data fields in R1*

| Contents | Matched data type | Variable | # |
|---|---|---|---|
| **Original record** | | | |
| ’2023-09-24 16:43:59 4.39.237.73 "Mozilla/5.0 (X11; Linux x86_64; rv:102.0) 020 " 200 10348’ | String | R1 | |
| **Data types of data fields in record** | | | |
| ’2023-09-24’ | DATA | - | 1 |
| ’ ’ | S | - | 2 |
| ’16:43:59’ | DATA | - | 3 |
| ’ ’ | S | - | 4 |
| ’4.39.237.73’ | DATA | - | 5 |
| ’ ’ | S | - | 6 |
| ’"Mozilla/5.0’ | DATA | - | 7 |
| ’ ’ | S | - | 8 |
| ’(X11;’ | DATA | - | 9 |
| ’ ’ | S | - | 10 |
| ’Linux’ | DATA | - | 11 |
| ’ ’ | S | - | 12 |
| ’x86_64;’ | DATA | - | 13 |
| ’ ’ | S | - | 14 |
| ’rv:102.0)’ | DATA | - | 15 |
| ’ ’ | S | - | 16 |
| ’020’ | DATA | - | 17 |
| ’ ’ | S | - | 18 |
| ’"’ | DATA | - | 19 |
| ’ ’ | S | - | 20 |
| ’200’ | DATA | extracted_field | 21 |
| ’ ’ | S | - | 22 |
| ’10348’ | DATA | - | 23 |

In Tab. 1, the term ’200’ selected by the user is the 21st field (#21 in the table). This field is arranged after 10 preceding fields having the data type DATA and 10 preceding separators S. The order of fields is indicated by a column ’#’ in the table, e.g., #1 for the 1st field, #2 for the 2nd field.

Concatenating the data types up to and including the selected field yields the extraction pattern ExPat1 for extracting the selected field from R1:

ExPat1 = ’DATA S DATA S DATA S DATA S DATA S DATA S DATA S DATA S DATA S DATA S DATA:extracted_field’

In order to allow post-processing of extracted data, the extracted field is assigned to a variable, e.g. to

extracted_field. In extraction patterns, an assignment to a variable is indicated by the name of the data type, followed by a colon, followed by the name of the variable. Thus, the expression 'DATA:extracted_field' in ExPat1 assigns the 21st expression having the data type DATA to the variable extracted_field. Note that in order to successfully extract the selected field by applying ExPat1 to R1, the entire extraction pattern needs to match. In other words, data extraction fails if any part of the extraction pattern does not match.

Data extraction by applying ExPat1 to R1 correctly extracts '200' from R1 (see Tab. 2).

*Tab. 2 Extracting the selected field by applying ExPat1 to R1*

| Contents | Matched data type | Variable | # |
|---|---|---|---|
| **Original record** | | | |
| '2023-09-24 16:43:59 4.39.237.73 "Mozilla/5.0 (X11; Linux x86_64; rv:102.0) 020 " 200 10348' | String | R1 | |
| **Data types of data fields in record** | | | |
| '2023-09-24' | DATA | - | 1 |
| ' ' | S | - | 2 |
| '16:43:59' | DATA | - | 3 |
| ' ' | S | - | 4 |
| '4.39.237.73' | DATA | - | 5 |
| ' ' | S | - | 6 |
| '"Mozilla/5.0' | DATA | - | 7 |
| ' ' | S | - | 8 |
| '(X11;' | DATA | - | 9 |
| ' ' | S | - | 10 |
| 'Linux' | DATA | - | 11 |
| ' ' | S | - | 12 |
| 'x86_64;' | DATA | - | 13 |
| ' ' | S | - | 14 |
| 'rv:102.0)' | DATA | - | 15 |
| ' ' | S | - | 16 |
| '020' | DATA | - | 17 |
| ' ' | S | - | 18 |
| '"' | DATA | - | 19 |
| ' ' | S | - | 20 |
| '200' | DATA | extracted_field | 21 |

However, applying ExPat1 to the other records R2 to R4 in order to extract the selected field fails, as can be seen in Tab. 3 to Tab. 5 below:

*Tab. 3 Attempting to extract the selected field by applying ExPat1 to R2*

| Contents | Matched data type | Variable | # |
|---|---|---|---|
| **Original record** | | | |
| '2023-09-24 16:43:59 4.39.237.73 "curl/7.54.1 254 " 404 149' | String | R2 | |
| **Data types of data fields in record** | | | |
| '2023-09-24' | DATA | - | 1 |

(continued)

| Data types of data fields in record | | | |
|---|---|---|---|
| ' ' | S | - | 2 |
| '16:43:59' | DATA | - | 3 |
| ' ' | S | - | 4 |
| '4.39.237.73' | DATA | - | 5 |
| ' ' | S | - | 6 |
| '"curl/7.54.1' | DATA | - | 7 |
| ' ' | S | - | 8 |
| '254' | DATA | - | 9 |
| ' ' | S | - | 10 |
| '"' | DATA | - | 11 |
| ' ' | S | - | 12 |
| '404' | DATA | - | 13 |
| ' ' | S | - | 14 |
| '149' | DATA | - | 15 |
| - | | - | |
| - | | - | |
| - | | - | |
| - | | - | |
| - | | - | |
| - | | | |

*Tab. 4 Attempting to extract the selected field by applying ExPat1 to R3*

| Contents | Matched data type | Variable | # |
|---|---|---|---|
| **Original record** | | | |
| '2023-09-24 16:43:59 example.com "curl/7.54.1 254 " 304 2583' | String | R3 | |
| **Data types of data fields in record** | | | |
| '2023-09-24' | DATA | - | 1 |
| ' ' | S | - | 2 |
| '16:43:59' | DATA | - | 3 |
| ' ' | S | - | 4 |
| 'example.com' | DATA | - | 5 |
| ' ' | S | - | 6 |
| '"curl/7.54.1' | DATA | - | 7 |
| ' ' | S | - | 8 |
| '254' | DATA | - | 9 |
| ' ' | S | - | 10 |
| '"' | DATA | - | 11 |
| ' ' | S | - | 12 |
| '304' | DATA | - | 13 |

(continued)

| Data types of data fields in record | | | |
|---|---|---|---|
| ’ ’ | S | - | 14 |
| ’2583’ | DATA | - | 15 |
| - | | - | |
| - | | - | |
| - | | - | |
| - | | - | |
| - | | - | |
| - | | | |

*Tab. 5 Attempting to extract the selected field by applying ExPat1 to R4*

| Contents | Matched data type | Variable | # |
|---|---|---|---|
| **Original record** | | | |
| ’2023-09-24 16:43:37 "curl/7.54.1 254 " 200 10342’ | String | R4 | |
| **Data types of data fields in record** | | | |
| ’2023-09-24’ | - | DATA | 1 |
| ’ ’ | - | S | 2 |
| ’16:43:37’ | - | DATA | 3 |
| ’ ’ | - | S | 4 |
| ’"curl/7.54.1’ | - | DATA | 5 |
| ’ ’ | - | S | 6 |
| ’254’ | - | DATA | 7 |
| ’ ’ | - | S | 8 |
| ’"’ | - | DATA | 9 |
| ’ ’ | - | S | 10 |
| ’200’ | - | DATA | 11 |
| ’ ’ | - | S | 12 |
| ’10342’ | - | DATA | 13 |
| - | | - | |
| - | | - | |
| - | | - | |
| - | | - | |
| - | | - | |
| - | | - | |
| - | | - | |
| - | | | |

Extracting data from records R2 to R4 fails at different stages: In records R2 and R3, no separator S is identified after the 15$^{th}$ field, thus data extraction fails. In R4, no separator S is identified after the 13$^{th}$ field, thus also in this case, data extraction fails. It is noted that if data extraction fails at any stage, no data is extracted from the record at all. In other words, unless the entire extraction pattern ExPat1 matches a record, no data is extracted from the record. In summary, extracting data from records by applying ExPat1 to R2 to R4 failed as the patterns did not match the records and consequently no data

was extracted. However, although data extraction from records R2-R4 fails, only the row where an expression in the extraction pattern ExPat1 does not match the respective field in the record for the first time and subsequent rows are crossed out.

In a second application example, not just the order of fields in the record but also the data type of fields is considered. In order to show the difference to the first application example, the reference record R1 as well as the other records R2 to R4 in Fig. 1 are used again. Also in this example, the field ’200’ shall be extracted from R1. Data extraction is done as follows:

First, the data type of the selected field is determined. The different data types for the selected field are given in Tab. 6:

*Tab. 6 Data types of selected field in record*

| **Matcher** | **Format** | **Data type description** |
|---|---|---|
| JSON | | JSON object |
| KVP | | Key-value-pair object |
| TIMESTAMP | yyyy-MM-dd HH:mm:ss.S Z’ | Different formats of time stamps |
| | yyyy-MM-dd HH:mm:ss.S’,tz=’UTC’ | |
| | yyyy-MM-dd\tHH:mm:ss’,tz=’UTC’ | |
| | yyyy-MM-ddTHH:mm:ss.SSSZ’ | |
| | yyyy-MM-dd HH:mm:ss Z’ | |
| | yyyy-MM-ddTHH:mm:ssZ’ | |
| | yyyy-MM-dd HH:mm:ss’,tz=’UTC’ | |
| | MMM d HH:mm:ss’,tz=’UTC’ | |
| | E MMM dd HH:mm:ss.S yyyy’,tz=’UTC’ | |
| | dd/MMM/yyyy:HH:mm:ss Z’ | |
| | dd/MMM/yyyy:HH:mm:ss.S’,tz=’UTC’ | |
| | dd/MMM/yyyy:HH:mm:ss’,tz=’UTC’ | |
| | MM/dd-HH:mm:ss.S’,tz=’UTC’ | |
| | yyyy/MM/dd HH:mm:ss’,tz=’UTC’ | |
| | M/d/yyyy h:mm:ss a’,tz=’UTC’ | |
| IPADDR | | IP address (IPV4 or IPV6) |
| LONG | | |
| DOUBLE | | |
| BOOLEAN | | |
| SQS | | Single quoted string |
| CSVSQS | | Comma separated values of SQS |
| DQS | | Double quoted string |
| CSVDQS | | Comma separated values of DQS |
| STRING | | Default data type |

When determining the data type of the selected field, the contents of the selected field is parsed and compared to the formats given in Tab. 6 from top to bottom. Comparing starts with the first row JSON in the table, and if the data type does not match, the next row immediately below is compared. This is done until a matching data type is found. If no matching data type is identified, STRING is used as the default data type for the selected field.

For the selected field ’200’ in R1 the data type LONG is identified as the data types JSON, KVP, TIMESTAMP and IPADDR located above in Tab. 6 do not match. E.g., the format of the data type JSON starts with an opening curly bracket and ends with a closing curly bracket. Parsing the selected field starts at the very left or at the first character/byte of the

record. As the first byte / character is not an open curly bracket, the data type JSON does not match. Repeating this successively for the data types KVP, TIMESTAMP and IPADDR yields that these data types do not match either. However, the selected field '200' matches the data type LONG, thus, the selected field is identified as a LONG.

After having identified the data type of the selected field, the data types of fields preceding the selected field and the field immediately following the selected field in the record R1 are identified. This is done by attempting to match the data types in Tab. 7 from the top until a match is found. If a match is found then the matching data type is added (concatenated) to the extraction pattern, otherwise the matched character is marked as a group of characters. Thus, the default data type is a group of characters (short GC). Then the position is incremented by the length of the match and the process starts again.

The group of characters GC is continued until the last character before the next data type is identified. Note that the range of characters that can be matched by GC are limited to the non-numerical range. The characters in the GC are used to generate the following matching expressions: 1) if the first and the last characters in the GC are the same and the number of characters in GC exceeds 2 then two literal expressions for the first and last characters of the GC, and a character group expression matching all characters except the first and last characters are generated, else 2) if the number of characters in GC exceeds 1 then a character group expression matching all non-numeric characters except the last character preceding the next identified data type and a literal expression for the last character are generated. This can be expressed using negated numerical range '!0-9' appended with the last character preceding next identified data type, otherwise 3) a literal expression for the last character before next identified data type is generated.

*Tab. 7 Data types of other fields in record*

| Matcher | Format | Data type description |
|---|---|---|
| JSON | | JSON object |
| KVP | | Key-value-pair object |
| TIMESTAMP | yyyy-MM-dd HH:mm:ss.S Z' | Different time stamp formats |
| | yyyy-MM-dd HH:mm:ss.S',tz='UTC' | |
| | yyyy-MM-dd\tHH:mm:ss',tz='UTC' | |
| | yyyy-MM-ddTHH:mm:ss.SSSZ' | |
| | yyyy-MM-dd HH:mm:ss Z' | |
| | yyyy-MM-ddTHH:mm:ssZ' | |
| | yyyy-MM-dd HH:mm:ss',tz='UTC' | |
| | MMM d HH:mm:ss',tz='UTC' | |
| | E MMM dd HH:mm:ss.S yyyy',tz='UTC' | |
| | dd/MMM/yyyy:HH:mm:ss Z' | |
| | dd/MMM/yyyy: HH:mm:ss.S', tz='UTC' | |
| | dd/MMM/yyyy: HH:mm:ss', tz='UTC' | |
| | MM/dd-HH:mm:ss.S',tz='UTC' | |
| | yyyy/MM/dd HH:mm:ss',tz='UTC' | |
| | M/d/yyyy h:mm:ss a',tz='UTC' | |
| IPADDR | | IP Address (IPV4 or IPV6) |
| LONG | | |
| DOUBLE | | |
| BOOLEAN | | |
| SQS | | Single quoted string |
| CSVSQS | | Comma separated values of SQS |
| DQS | | Double quoted string |
| CSVDQS | | Comma separated values of DQS |
| GC | | Group of characters Default data type |

Doing so identifies the following data types in R1:

*Tab. 8 Identified data types of data fields in R1*

| Contents | Matched data type | Variable |
|---|---|---|
| **Original record** | | |
| ’2023-09-24 16:43:59 4.39.237.73 "Mozilla/5.0 (X11; Linux x86_64; rv:102.0) 020 " 200 10348’ | String | R1 |
| **Data types of data fields in record** | | |
| ’2023-09-24 16:43:59’ | TIME-STAMP | - |
| ’ ’ | ’ ’ (LIT) | - |
| ’4.39.237.73’ | IPADDR | - |
| ’ ’ | ’ ’ (LIT) | - |
| ’"Mozilla/5.0 (X11; Linux x86_64; rv:102.0) 020 "’ | DQS | - |
| ’ ’ | ’ ’ (LIT) | - |
| ’200’ | LONG | extracted_field |
| ’ ’ | ’ ’ (LIT) | - |

Note that the robustness of data extraction is improved by including the data type of the field immediately following the extracted field in the extraction pattern. In case no field/character is present after the selected field, an end-of-string character is identified. Although implementations may vary, in the C language, the end-of-string character is represented by ASCII code 0. Thus, the extraction pattern ExPat2 for extracting the selected field ’200’ from R1 is:

ExPat2 = ‘TIMESTAMP ‘ ‘ IPADDR ‘ ‘ DQS ‘ ‘ LONG:extracted_field ‘ “

The pattern ExPat2 comprises the extracted field ’LONG:extracted_field’ and seven additional expressions. As in the first application example, the content of the selected field is assigned to the variable extracted_field. All other expressions in the pattern remain unassigned.

Applying the extraction pattern ExPat2 to R1 correctly extracts the selected field ’200’ and assigns its content to the variable extracted_field having the data type LONG. This behavior is as expected.

*Tab. 9 Extracting the selected field by applying ExPat2 to R1*

| Contents | Matched data type | Variable |
|---|---|---|
| **Original record** | | |
| ’2023-09-24 16:43:59 4.39.237.73 "Mozilla/5.0 (X11; Linux x86_64; rv:102.0) 020 " 200 10348’ | String | R1 |
| **Data types of data fields in record** | | |
| ’2023-09-24 16:43:59’ | TIME-STAMP | - |
| ’ ’ | ’ ’ (LIT) | - |
| ’4.39.237.73’ | IPADDR | - |
| ’ ’ | ’ ’ (LIT) | - |
| ’"Mozilla/5.0 (X11; Linux x86_64; rv:102.0) 020 "’ | DQS | - |
| ’ ’ | ’ ’ (LIT) | - |
| ’200’ | LONG | extracted_field |
| ’ ’ | ’ ’ (LIT) | - |

Applying ExPat2 to the first other record R2 also extracts the correct field from the record (see below).

*Tab. 10 Extracting the selected field by applying ExPat2 to R2*

| '2023-09-24 16:43:59 4.39.237.73 "curl/7.54.1 254 " 404 149' | String | R2 |
|---|---|---|
| **Data types of data fields in record** | | |
| '2023-09-24 16:43:59' | TIME-STAMP | - |
| ' ' | ' ' (LIT) | - |
| **Contents** | **Matched data type** | **Variable** |
| 4.39.237.73 | IPADDR | - |
| ' ' | ' ' (LIT) | - |
| "curl/7.54.1 254 " | DQS | - |
| ' ' | ' ' (LIT) | - |
| 404 | LONG | extracted_field |
| ' ' | ' ' (LIT) | - |

Whereas ExPat2 successfully extracts a LONG having the value 404 from R2 and assigns it to the variable extracted_field, data extraction fails for records R3 and R4 as the terms "example.com" from R3 and "curl/7.54.1 254 " from R4 cannot be mapped to IP addresses (see below):

*Tab. 11 Attempting to extract the selected field by applying ExPat2 to R3*

| **Contents** | **Matched data type** | **Variable** |
|---|---|---|
| **Original record** | | |
| '2023-09-24 16:43:59 example.com "curl/7.54.1 254 " 304 2583' | String | R3 |
| **Data types of data fields in record** | | |
| '2023-09-24 16:43:59' | TIME-STAMP | - |
| ' ' | ' ' (LIT) | - |
| | | - |

*Tab. 12 Attempting to extract the selected field by applying ExPat2 to R4*

| **Contents** | **Matched data type** | **Variable** |
|---|---|---|
| **Original record** | | |
| '2023-09-24 16:43:37 "curl/7.54.1 254 " 200 10342' | String | R4 |
| **Data types of data fields in record** | | |
| '2023-09-24 16:43:37' | TIME-STAMP | - |
| ' ' | ' ' (LIT) | - |
| | | - |

For conciseness, Tab. 11 and Tab. 12 show only those expressions of ExPat2 until data extraction fails for the very first time.

How the robustness of data extraction can be improved further is shown in a third application example. Also in this example, the selected field '200' shall be extracted from the reference record R1. The other records R2 to R4 are used to evaluate the robustness of data extraction. Identifying the data type of the selected field, the header and the field immediately following the selected field (see Tab. 8) and concatenating the data types of the header, the selected field including the assignment of the extracted field, and the field immediately following the selected field yields the unoptimized extraction pattern ExPat3:

ExPat3 = ExPat2 = 'TIMESTAMP ' ' IPADDR ' ' DQS ' ' LONG:extracted_field ' "

In order to increase the robustness of data extraction, the length of the unoptimized extraction pattern ExPat3 is reduced as will be shown next. In a first step in the reduction, ExPat3 is split into two parts, i.e., into a first part Rp from the beginning up to the selected field, and a second part Rt comprising the selected field and the field immediately following this field. Doing this yields:

Rp = ‘TIMESTAMP ‘ ‘ IPADDR ‘ ‘ DQS ‘ “

Rt = ‘LONG:extracted_field ‘ “

It is noted that Rp comprises 6 and Rt comprises 2 expressions, respectively. The variable n is assigned the number of expression in Rp, n = |Rp| = 6, and m is assigned the number of expression in Rt, m = |Rt| = 2.

The reduction of the extraction pattern is done iteratively starting with iteration 1. At the beginning of each iteration, it is checked whether |Rp| > |Rt|. If this is the case, the n-th expression of Rp is inserted at the beginning of Rt. As n=6, the sixth element of Rp, "' '" is inserted at the beginning of Rt:

Rt = “ ‘ LONG:extracted_field ‘ “

Doing this, increases the length of Rt from 2 to 3, i.e. m=3. Next, Rp is sliced into slices, also known as sliding windows, Rc having the same length as m, i.e. length=3. The slicing of Rp into Rc is schematically shown below:

*Tab. 13 Iteration 1: Slicing of Rp*

| | **Elements in ordered list** | | | | | |
|---|---|---|---|---|---|---|
| Rp | TIMESTAMP | ' ' | IPADDR | ' ' | DQS | ' ' |
| $Rc_1$ | TIMESTAMP | ' ' | IPADDR | | | |
| $Rc_2$ | | ' ' | IPADDR | ' ' | | |
| $Rc_3$ | | | IPADDR | ' ' | DQS | |
| $Rc_4$ | | | | ' ' | DQS | ' ' |

Slicing up Rp yields n-m+1 slices, here 4 slices, $Rc_1 ... Rc_4$, such that all elements of Rp are covered by slices.

Next, it is sequentially checked whether Rt is disjoint to Rc:

*Tab. 14 Iteration 1: Checking whether Rt is disjoint to slices Rc* of *Rp*

| # | **Check *Rt* ⊄ Rc** | **Result** |
|---|---|---|
| 1 | (' ' LONG: extracted_field ' ') ⊄ (TIMESTAMP ' ' *IPADDR*) | true |
| 2 | (' ' LONG: extracted_field ' ') ⊄ (' ' *IPADDR ' '*) | true |
| 3 | (' ' LONG: extracted_field ' ') ⊄ (*IPADDR* ' ' *DQS*) | true |
| 4 | (' ' LONG: extracted_field ' ') ⊄ (' ' *DQS* ' ') | true |

In checking whether expressions are disjoint, it is possible to stop if one pair of expressions is disjoint. The sign ⊄ represents a check for disjoint expressions: Disjoint expressions yield a true result, otherwise the result is false. Expressions are also called *matchers* in this document.

The following definitions (short DEF) are used to check whether expressions / matchers are disjoint:

**DEF 1:** Matcher a is disjoint with respect to matcher b when a does not accept any word from the language vocabulary L(b), and the vocabulary L(a) is not subset of L(b).

Example 1: Let matcher a = IPADDR (version 4), short IPV4, and matcher b = LONG. Matcher a (LONG) accepts digits 0-9 and dot characters while matcher b (IPV4) accepts digits 0-9. Matcher a does not accept any word from b and L(a) is not subset of L(b), therefore a is disjoint to b.

Example 2: Let matcher a = LONG and matcher b = IPADDR (version 4), short IPV4. Matcher a does accept word from b (by matching up to first three digits in an IPV4 address) and the vocabulary L(a) is subset of L(b), therefore a is not disjoint to b.

**DEF 2**: An expression A consisting of a k-tuple of concatenated matchers $A = \{a_1, ... a_k\}$ is disjoint with respect to B

= {$b_1$,...$b_k$} if they satisfy both following conditions:

1. for each b in B, there exists at least one a in A that is disjoint to b, and
2. there exists at least one pair ($a_i$, $b_i$) where $a_i$ is disjoint to $b_i$.

Example 3: A={IPADDR, [a-z]} is disjoint to B={LONG, [a-z0-9]} because: DEF 2.1: [a-z] is disjoint to LONG and IPADDR is disjoint to [a-z0-9], AND DEF 2.2: IPADDR is disjoint to LONG.

Example 4:A={LONG,[a-z0-9]} is not disjoint to B={IPADDR,[a-z]} because DEF 2.2: LONG is not disjoint to IPADDR and [a-z0-9] is not disjoint to [a-z].

Example 5: A={IPADDR,DATA,[ ]} is disjoint to B={[bc],LONG,DOUBLE} because DEF 2.1: IPADDR is disjoint to [bc] and [ ] is disjoint to LONG and [ ] is disjoint to DOUBLE, and DEF 2.2: IPADDR is disjoint to [bc].

Example 6: A={[bc],INT,DOUBLE} is not disjoint to B ={IPADDR,DATA,[ ]} because DEF 2.1: DATA is not disjoint to any matcher in A.

**DEF 3:** The k-tuple expression Rt = {$r_1$,...$r_{k<n}$} is disjoint with respect to an expression consisting of concatenated matchers Rp = {$r_1$,...$r_n$} if it is disjoint against all sequential k-tuples in Rp.

In case not all slices Rc of Rp are disjoint to Rt, n is decremented by 1, and the next iteration is started. In our case, however, all checks in Tab. 14 yield true results, and the iteration is stopped. Hence, the optimized extraction pattern ExPat3* is given by concatenating DATA* with '(', Rt, and ')', thus:

ExPat3* = 'DATA* (' ' LONG:extracted_field ' ')'

Note that the expression 'DATA*' indicates a matcher for any data type having arbitrary length, including length=0.

As noted above, if at least a single check yields false, another iteration is started. Note that the optimized, also called reduced, extraction pattern ExPat3* comprises the extracted field 'LONG:extracted_field' and 3 additional expressions. In the above application examples, the total number of expressions in the extraction patterns was reduced from 21 in the $1^{st}$ example to 8 in the $2^{nd}$ example, and from 8 to 4 in the $3^{rd}$ example. However, not just the length of extraction patterns is important, also the robustness of patterns is important. Next, the robustness of ExPat3*will be demonstrated.

In an optional step, the robustness of the reduced extraction pattern ExPat3* is checked for records R1 to R4:

*Tab. 15 Check - Extracting the selected field by applying ExPat3* to R1*

| Contents | Matched data type | Variable |
|---|---|---|
| **Original record** | | |
| '2023-09-24 16:43:59 4.39.237.73 "Mozilla/5.0 (X11; Linux x86_64; rv:102.0) 020 " 200 10348' | String | R1 |
| **Data types of data fields in record** | | |
| '2023-09-24 16:43:59 4.39.237.73 "Mozilla/5.0 (X11; Linux x86_64; rv:102.0) 020 "' | DATA | - |
| **Contents** | **Matched data type** | **Variable** |
| ' ' | ' ' (LIT) | - |
| '200' | LONG | extracted_field |
| ' ' | ' ' (LIT) | - |

*Tab. 16 Check - Extracting the selected field by applying ExPat3* to R2*

| Contents | Matched data type | Variable |
|---|---|---|
| **Original record** | | |
| '2023-09-24 16:43:59 4.39.237.73 "curl/7.54.1 254 " 404 149' | String | R2 |
| **Data types of data fields in record** | | |
| '2023-09-24 16:43:59 4.39.237.73 "curl/7.54.1 254 "' | DATA | - |
| ' ' | ' ' (LIT) | - |

(continued)

| Data types of data fields in record | | |
|---|---|---|
| ’404’ | LONG | extracted_field |
| ’ ’ | ’ ’ (LIT) | - |

*Tab. 17 Check - Extracting the selected field by applying ExPat3* to R3*

| Contents | Matched data type | Variable |
|---|---|---|
| **Original record** | | |
| ’2023-09-24 16:43:59 example.com "curl/7.54.1 254 " 304 2583’ | String | R3 |
| **Data types of data fields in record** | | |
| ’2023-09-24 16:43:59 example.com "curl/7.54.1 254 "’ | DATA | - |
| ’ ’ | ’ ’ (LIT) | - |
| ’304’ | LONG | extracted_field |
| ’ ’ | ’ ’ (LIT) | - |

*Tab. 18 Check - Extracting the selected field by applying ExPat3* to R4*

| Contents | Matched data type | Variable |
|---|---|---|
| **Original record** | | |
| ’2023-09-24 16:43:37 "curl/7.54.1 254 " 200 10342’ | String | R4 |
| **Data types of data fields in record** | | |
| ’2023-09-24 16:43:37 "curl/7.54.1 254 "’ | DATA | - |
| ’ ’ | ’ ’ (LIT) | - |
| ’200’ | LONG | extracted_field |
| **Contents** | **Matched data type** | **Variable** |
| ’ ’ | ’ ’ (LIT) | - |

As can be seen in tables Tab. 15 to Tab. 18, the HTTP status codes were correctly identified from the reference record R1 and all other records R2 to R4. Thus, reducing the extraction pattern greatly increases the robustness of data extraction.

It is noted that not just the identification of proper fields in records is important. As extracted expressions are typically stored in a database, such that e.g., an integer is stored as LONG, a floating-point value as DOUBLE, true/false values as bits etc., also the data type of the selected field is important. The disclosed method greatly improves the robustness of data extraction including the identification of correct data types. In addition, the disclosed method is not limited to extracting just one field from records as also multiple fields can be extracted.

Furthermore, the disclosed method for data extraction is not limited to particular pattern languages, such as the Dynatrace Pattern Language DPL. This will be demonstrated in a fourth application example using *RegEx,* which is the most widely used pattern language at all.

For brevity, only the data types used in the third application example are mapped to RegEx patterns (see Tab. 19 below):

*Tab. 19 Mapping of data types to RegEx*

| Data type | RegEx pattern |
|---|---|
| TIMESTAMP | ’(?:(?:[0-9]{4}){1}(?:-[0-9]{2}){2} [0-9]{2}(?::[0-9]{2}){2})’ |
| IPADDR | ’(?:[0-9]{1,3}\.){3}[0-9]{1,3}’ |
| DQS | ’(?:"[^"]+")’ |

(continued)

| Data type | RegEx pattern |
|---|---|
| LONG | '(?:[0-9]+)' |
| CG | '(?: )' |

In the first step, the data type of the selected field is determined. For this, matching the selected field to the patterns in Tab. 19 from top down is tried out until the selected field '200' matches the pattern.

Using PowerShell, the method starts with trying whether '200' matches the TIMESTAMP pattern by executing '(Select-String -InputObject '200' -Pattern '(?:(?:[0-9]{4}){1}(?:-[0-9]{2}){2} [0-9]{2}(?::[0-9]{2}){2})').Matches.Value'.

As this does not yield a result, the field does not match the timestamp pattern. Next, it is tried whether '200' matches the IPADDR pattern by executing '(Select-String -InputObject '200' - Pattern '(?:[0-9]{1,3}\.){3}[0-9]{1,3}').Matches.Value'. Also this is not successful. Subsequently, it is tried whether '200' matches the LONG pattern by executing '(Select-String -InputObject '200' -Pattern '(?:[0-9]+)').Matches.Value'. This match was successful as the output '200' was produced. Thus, the computer processor identified the data type LONG for the selected field.

Next, the data types for the header, i.e. the fields up to the selected field, and the field immediately following the selected field are identified. First, it is checked whether the record comprises a TIMESTAMP by executing '(Select-String -InputObject '2023-09-24 16:43:59 4.39.237.73 \"Mozilla/5.0 (X11; Linux x86_64; rv:102.0) 020 \" 200 10348' -Pattern '(?:(?:[0-9]{4}){1}(?:-[0-9]{2}){2} [0-9]{2}(?::[0-9]{2}){2})').Matches.Value'. This outputs the timestamp '2023-09-24 16:43:59' located at the beginning of the record. Thus, the first field has the data type TIMESTAMP. Removing the timestamp from the record gives the remaining record R=' 4.39.237.73 "Mozilla/5.0 (X11; Linux x86_64; rv:102.0) 020 " 200 10348'. After each successful match, it is checked, whether the first character of R is a literal by executing '(Select-String - InputObject ' 4.39.237.73 \"Mozilla/5.0 (X11; Linux x86_64; rv:102.0) 020 \" 200 10348' -Pattern '(?: )').Matches.Value'. This yields the first literal located at the beginning of R. Thus, the second field is a literal. Removing the literal from the record yields the remaining record R='4.39.237.73 "Mozilla/5.0 (X11; Linux x86_64; rv:102.0) 020 " 200 10348'. Next, it is checked whether R contains an IPADDR by executing '(Select-String -InputObject '4.39.237.73 \"Mozilla/5.0 (X11; Linux x86_64; rv:102.0) 020 \" 200 10348' -Pattern '(?:[0-9]{1,3}\.){3}[0-9]{1,3}').Matches.Value'. This yields '4.39.237.73' located at the beginning of R. Thus, the third field has the data type IPADDR. Next, the IP address is removed from R yielding ' "Mozilla/5.0 (X11; Linux x86_64; rv:102.0) 020 " 200 10348'. Since the match was successful, it is checked, whether the first character of R is a literal by executing '(Select-String -InputObject ' \"Mozilla/5.0 (X11; Linux x86_64; rv:102.0) 020 \" 200 10348' -Pattern '(?: )').Matches.Value'. This yields that the fourth field is a literal. Removing the literal from the record yields '\"Mozilla/5.0 (X11; Linux x86_64; rv:102.0) 020 " 200 10348'. Next, it is checked whether R contains a double quoted string by executing '(Select-String -InputObject '\"Mozilla/5.0 (X11; Linux x86_64; rv:102.0) 020 \" 200 10348' -Pattern '(?:"[^"]+")').Matches.Value'. Also this match was successful as ""Mozilla/5.0 (X11; Linux x86_64; rv:102.0) 020 " was produced. Thus, the fifth field has the data type DQS. Removing the fifth field from R yields ' 200 10348'. After identifying that the sixth field is a literal and removing it from the record yields R = '200 10348'. We have previously already identified that the selected field '200' has the data type LONG, thus, the seventh field has the data type LONG. As the match was successful, it is checked whether the eighth field is a literal. Also this proved to be correct.

In essence, the data types given in Tab. 8 were identified by using the RegEx pattern matcher. It is thus shown that the disclosed method is universally applicable since it is not limited to a particular pattern language.

In a fifth application example, the field '23198' shall be extracted from the reference record R10

R10='2024-01-08 14:23:56;localhost;200;23198;"/public/v1/example"' (see Fig. 2). In R10, fields are separated by semicolons. The presented method works for all common separators, as will be shown next. As before, the selected field 23198 can be defined, e.g., by selecting it with a pointing device.

In a first step, the data type of the selected field is identified. Parsing the field and comparing it to the data types in Tab. 6 from the top downwards identifies the data type LONG for the field. As the selected field shall be assigned to extracted_field, the expression combining the data type with the name of the expression is LONG:extracted_field.

Next, the data types in the reference record including the header, i.e., the part in the record preceding the extracted field, and the field immediately following the extracted field are identified. This is done by parsing the fields and comparing it to the data types in Tab. 7 from the top downwards.

The identification of data types for other fields in the record is described in some more detail: Parsing starts with the first character '2' of R1. For this it is checked whether the matcher JSON in the first row of Tab. 7 matches. This is not the case, as JSON expressions start with an opening curly bracket. Thus, it is checked whether the matcher KVP in the next row of the table is matching. At first, this seems to be the case, and the parsing position is iteratively moved to the right. However, parsing the field further yields that KVP does not match either since the field does not contain a key-value-pair separator '='. Thus, the next matcher TIMESTAMP is checked whether it matches. This is the case, and the field comprising the characters '2024-01-08 14:23:56' is identified as a timestamp. Next, it is checked whether the character ';'

at position 20 matches any datatype in Tab. 7. For this, only the default data type group of characters, short GC, is matching. In parsing, the position is iteratively moved to the right until another datatype is identified, i.e., until the next datatype LONG for '200' is identified. Thus, the characters ';localhost;' are marked as a group of characters GC. The characters in GC are used to generate matching expressions, as described above. As GC comprises 11 characters, and the first and the last character in GC are identical, a literal ';', a character group CG, and another literal ';' are generated. The field '200' starting at position 21 is identified as a LONG. Parsing continues at position 34 with ';', which is marked as another group of characters CG. As before, GC is continued until the last character before the next identified data type in Tab. 7, which is another LONG '23198'. Thus, GC comprises a single character ';'. In this case, only the literal ';' is generated. This process is continued until the datatype of the field following the selected field is identified.

Doing this identifies the following data types:

*Tab. 20 Identified data types of data fields in R10*

| Contents | Matched data type | Variable |
|---|---|---|
| **Original record** | | |
| '2024-01-08 14:23:56 localhost 200 23198 "/public/v1/example"' | String | R10 |
| **Data types of data fields in record** | | |
| '2024-01-08 14:23:56' | TIMESTAMP | - |
| ';' | ';' (LIT) | |
| 'localhost' | CG | - |
| ';' | ';' (LIT) | |
| 200 | LONG | - |
| ';' | ';' (LIT) | - |
| 23198 | LONG | extracted_field |
| ';' | ';' (LIT) | - |

Concatenating the matched data types yields the unoptimized extraction pattern:

ExPat5 = 'TIMESTAMP ';' CG ';' LONG ';' LONG:extracted_field ';''

Following this, the unoptimized extraction pattern ExPat5 is split into two parts, namely a first part Rp from the beginning up to the extracted field, and a second part Rt beginning at the extracted field:

Rp = 'TIMESTAMP ';' CG ';' LONG ';''

Rt = 'LONG:extracted_field ';''

As the length of Rp > length of Rt, |Rp| = 6 > |Rt| = 2, the extraction pattern ExPat5 is reduced to improve the accuracy of data extraction. For this, the length of Rp, |Rp|, is assigned to the variable n, i.e., n = |Rp| = 6.

In a first iteration step of the optimization, the n-th element of Rp is inserted at the beginning of Rt, i.e., Rp(n) = ";" is inserted at the beginning of Rt yielding Rt = ";' LONG ';". Thus, the length of Rt is incremented from 2 to 3. Next, Rp is sliced into slices Rc having the same length as Rt, yielding

*Tab. 21 Iteration 1: Slicing of Rp*

| | Elements in ordered list | | | | | |
|---|---|---|---|---|---|---|
| Rp | TIMESTAMP | ';' | CG | ';' | LONG | ';' |
| $Rc_1$ | TIMESTAMP | ';' | CG | | | |
| $Rc_2$ | | ';' | CG | ';' | | |
| $Rc_3$ | | | CG | ';' | LONG | |

(continued)

| | Elements in ordered list | | | | | |
|---|---|---|---|---|---|---|
| $Rc_4$ | | | | ’;’ | LONG | ’;’ |

Next, it is checked whether Rt is disjoint to slices Rc. Checks #1 to #3 yield true, however, for check #4 it is immediately obvious that both expressions are identical and consequently these expressions are not disjoint. Hence, the result of the check is false. The checks are given below:

*Tab. 22 Checks performed in first iteration*

| # | **Check *Rt* $\not\subset$ Rc** | **Result** |
|---|---|---|
| 1 | ";’ LONG:extracted_field ’;" $\not\subset$ ’TIMESTAMP ’;’ CG’ | true |
| 2 | ";’ LONG:extracted_field ’;" $\not\subset$ ";’ CG ’;" | true |
| 3 | ";’ LONG:extracted_field ’;" $\not\subset$ ’CG ’;’ LONG’ | true |
| 4 | ";’ LONG:extracted_field ’;" $\not\subset$ ";’ LONG ’;" | false |

As at least one check yielded false (in our case, the fourth check), n is decremented by 1, hence n=5, and the second iteration is started.

Again, the n-th element of Rp, Rp(n), is inserted at the beginning of Rt, yielding Rt = ’LONG ’;’ LONG:extracted_field ’;". Thus |Rt| = 4.

Slicing up Rp into slices of length 4 yields three slices, namely

Rc1 = ‘TIMESTAMP ‘;‘ CG ‘;“,

Rc2 = “;‘ CG ‘;‘ LONG’,

and

Rc3 = ‘CG ‘;‘ LONG ‘;“.

Next, it is checked whether Rt is disjoint to Rc1,Rc2 and Rc3:

*Tab. 23 Checks performed in second iteration*

| | **Check *Rt* $\not\subset$ *Rc*** | **Result** |
|---|---|---|
| | ’LONG ’;’ LONG:extracted_field ’;" $\not\subset$ ’TIMESTAMP ’;’ CG ’;" | true |
| | ’LONG ’;’ LONG:extracted_field ’;" $\not\subset$ ";’ CG ’;’ LONG’ | true |
| | ’LONG ’;’ LONG:extracted_field ’;" $\not\subset$ ’CG ’;’ LONG ’;" | true |

These checks were successful. Thus, the iterative reduction of the length of the extraction pattern is stopped such that the optimized extraction pattern ExPat5* is the concatenation of DATA* with ’(’, Rt, and ’)’, hence:

ExPat5* = ‘DATA* (LONG ‘;‘ LONG:extracted_field ‘;‘)’

Optionally, it is checked whether the optimized extraction pattern ExPat5* really extracts the field ’23198’ from R10:

*Tab. 24 Extracting the selected field by applying ExPat5* to R10*

| **Contents** | **Matched data type** | **Variable** |
|---|---|---|
| **Original record** | | |
| 2024-01-08 14:23:56 localhost 200 23198 "/public/v1/example" | String | R10 |

(continued)

| Data types of data fields in record | | |
|---|---|---|
| ’2024-01-08 14:23:56 localhost 200 ’ | DATA* | - |
| 200 | LONG | - |
| ’;’ | ’;’ (LIT) | - |
| 23198 | LONG | extracted_field |
| ’;’ | ’;’ (LIT) | - |

Thus, data extraction was successful.

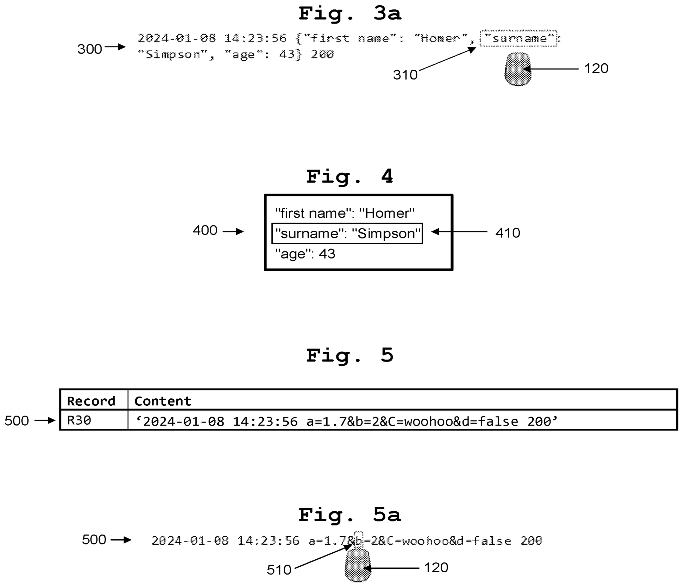

As JSON formats are both versatile and frequently used, extracting a field from a JSON expression is dealt with in a sixth application example. For demonstration, let us assume the following reference record R20: R20 = ’2024-01-08 14:23:56 {"first name": "Homer", "surname": "Simpson", "age": 43} 200’ from which the user selects the field ’surname’ for data extraction (see Fig. 3). A pointing device 120 may be used to select the field 310 (see Fig. 3a). The JSON object is assigned to the object ’JSONObj’ and the key-value pair to which the selected field belongs, shall be assigned to ’KVP’.

As the first row in Tab. 6 contains the data type JSON, it is first detected whether the reference record R20 contains a JSON object. We do that by attempting to match the JSON object in seeking fashion keeping account of the start position and length of the matched part. If the match was successful, i.e. a JSON object was found, it is validated whether the selected field falls within the boundaries of the JSON object. If no JSON object was found or the selection does not fall within the boundaries then the following data types are checked.

Parsing the reference record R20 in seeking fashion identifies a JSON object starting at position 21 and ending at position 76. The start and end of a JSON object is indicated by open and closed curly brackets "{", "}".

As JSON objects are dynamically allocated data types, a single JSON object can contain a vast number of different objects, such as key-value-pairs, arrays, nested data types etc. Thus, after detecting a JSON object, it is checked whether the selected field is located within the JSON object. As the selected field "surname" 310 starts at pos. 45 and ends at pos. 53, the field forms part of the JSON object. Thus, it is determined that the selected field 310 has the data type JSON.

Next, the data types of other fields in the header and the field following the selected field are determined in the record R20. This yields:

*Tab. 25 Identified data types of data fields in R20*

| Contents | Matched data type | Variable |
|---|---|---|
| **Original record** | | |
| ’2024-01-08 14:23:56 {"first name": "Homer", "surname": "Simpson", "age": 43} 200’ | String | R20 |
| **Data types of data fields in record** | | |
| ’2024-01-08 14:23:56’ | TIMESTAMP | - |
| ’ ’ | ’ ’ (LIT) | - |
| ’{"first name": "Homer", "surname": "Simpson", "age": 43}’ | JSON | JSONObj |
| ’ ’ | ’ ’ (LIT) | - |

Concatenating the data types of the detected data types for the header, the selected field and the field immediately following the selected field yields the unoptimized extraction pattern ExPat6:

ExPat6 = ‘TIMESTAMP ‘ ‘ JSON:JSONObj ‘ “

As outlined above, the unoptimized extraction pattern, ExPat6, is split into two parts, yielding:

Rp = ‘TIMESTAMP ‘ “

Rt = ‘JSON:JSONObj ‘ “

As Rp and Rt contain the same number of expressions, namely |Rp|=|Rt|=2, the optimized extraction pattern ExPat6* is given by concatenating DATA* with ’(’, Rt and ’)’, yielding

ExPat6* = ‘DATA* (JSON:JSONObj ‘ ‘)’

The optimized extraction pattern ExPat6* extracts the JSON object 400 and assigns it to JSONObj. After this, the JSON object is stored in a tree-like structure (see Fig. 4). Next, the tree is searched for the selected key "surname", the selected key-value pair 410 to which the selected field belongs is extracted, and the key-value pair is assigned to KVP.

Applying ExPat6* to R20 extracts the JSON object:

*Tab. 26 Extracting the JSON object by applying ExPat6* to R20*

| Contents | Matched data type | Variable |
|---|---|---|
| **Original record** | | |
| ’2024-01-08 14:23:56 {"first name": "Homer", "surname": "Simpson", "age": 43} 200’ | String | R20 |
| **Data types of data fields in record** | | |
| ’2024-01-08 14:23:56 ’ | DATA* | - |
| {"first name": "Homer", "surname": "Simpson", "age": 43} | JSON | JSONObj |
| ’ ’ | ’ ’ (LIT) | - |

Next, the key-value pair comprising the selected data field "surname" is extracted from the JSON object. Thus, the key-value pair ’"surname": "Simpson"’ is extracted and assigned to KVP. Hence, data extraction was successful.

Finally, extracting a field from a list of key-value-pairs is shown in a seventh application example. Let us assume the following reference record R30:

R30 = ‘2024-01-08 14:23:56 a=1.7&b=2&C=woohoo&d=false 200’

from which the user selects the field ’b’ for data extraction (see Fig. 5). As above, a pointing device 120 may be used to select the field ’b’ 510 (see Fig. 5a).

In a first step, the data type of the selected field is identified. Starting with the first data type JSON in Tab. 6 yields that no JSON object is contained in the record R30. Next, it is checked whether the record R30 contains a key-value pair (short KVP) object by looking for a combination of key, key-value pair separator, value, and separator. The key can consist of one or more small or capital letters, digits, underscore or minus characters ’[a-zA-Z0-9_-]+’, the key-value pair separator is ’=’, the value can be any type listed in Tab. 6 or a STRING, and the separator can be one of whitespace (ASCII 0x20; 0x9; 0xA 0xB; 0xC; 0xD), ’,’ or ’&’. Also key-value pairs are dynamically allocated data types, which can contain one or many key value pairs. In contrast to JSON objects, key-value pairs are more loosely defined by the following requirements: the key must be at least one char long, the key-value separator is an equality sign "=" and nothing else, and in case of multiple key-value pairs, separators are located between the key-value pairs.

If no KVP object was found or the selection does not fall within the object’s boundaries then the subsequent data types in Tab. 6 are checked.

With respect to the application example, parsing the record R30 in a seeking fashion identifies a key-value pair (short KVP) object starting at position 21 and ending at position 46. Next, it is checked whether the selected field "b" 510 is located within the KVP object. Also this is the case, since the field is located at position 27. Thus, the selected field forms part of a KVP object. Alike JSON objects, also KVP objects are extracted as a whole and the selected field or key-value pair is extracted in a subsequent step. The KVP object shall be assigned to KVPObj and the key-value pair which comprises the selected field shall be assigned to KVPair.

Next, the data types of the fields in the header and the field immediately following the selected field are determined in the record R30. This yields:

*Tab. 27 Identified data types of data fields in R30*

| Contents | Matched data type | Variable |
|---|---|---|
| **Original record** | | |
| '2024-01-08 14:23:56 a=1.7&b=2&C=woohoo&d=false 200' | String | R30 |
| **Data types of data fields in record** | | |
| '2024-01-08 14:23:56' | TIMESTAMP | - |
| ' ' | ' ' (LIT) | - |
| 'a=1.7&b=2&C=woohoo&d=false' | KVP | KPVObj |
| ' ' | ' ' (LIT) | - |

Concatenating the detected data types for the header, the key-value pair structure and the field immediately following yields the unoptimized extraction pattern ExPat7:

ExPat7 = 'TIMESTAMP ' ' KVP:KVPObj ' "

As outlined above, optimizing the unoptimized extraction pattern ExPat7 is started by first splitting ExPat7 into two parts, yielding:

Rp = 'TIMESTAMP ' "

Rt = 'KVP:KVPObj ' "

Since Rp and Rp have the same length, the optimized extraction pattern ExPat7* is given by concatenating DATA* with '(', Rt and ')', yielding ExPat7* = 'DATA* (KVP:KVPObj ' ')'

Applying ExPat7* to R30 extracts

*Tab. 28 Extracting the KVP object by applying ExPat7* to R30*

| Contents | Matched data type | Variable |
|---|---|---|
| **Original record** | | |
| '2024-01-08 14:23:56 a=1.7&b=2&C=woohoo&d=false 200' | String | R30 |
| **Data types of data fields in record** | | |
| '2024-01-08 14:23:56' | TIMESTAMP | - |
| ' ' | ' ' (LIT) | - |
| 'a=1.7&b=2&C=woohoo&d=false' | KVP | KPVObj |
| ' ' | ' ' (LIT) | - |

the KVP object KVPObj. Next, the key-value pair comprising the selected data field "b" is extracted from the KVP object. Thus, the key-value pair 'b=2' is extracted. Hence, also in this case the data extraction was successful.

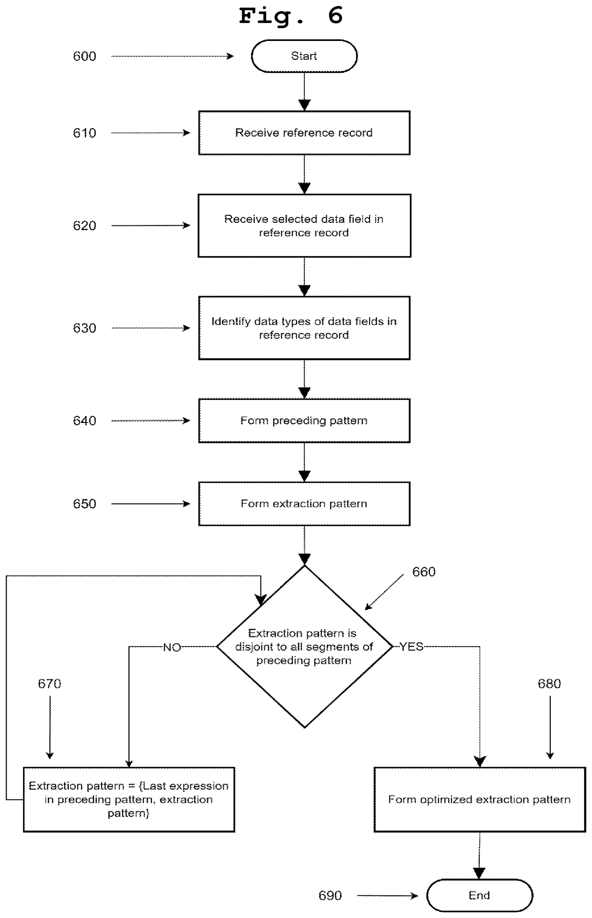

The main steps performed by the computer-implemented method for extracting data from textual records according to claim 1 are shown in Fig. 6. After the start 600 of the method, a reference record is received 610 by the computer processor. The reference record may, e.g. be input by a user or received from another application. In 620, the processor receives a selection of a data field in the reference record. Selecting a data field may be done by a pointing device, for example. In step 630, the data types of data fields in the reference record are identified, e.g., by comparing the format of each data field with a predefined list of formats of data types. After having identified the data types of data fields in the reference record, a preceding pattern of data types is formed in step 640 from the data types of the data fields preceding the selected data field in the reference record. Next, in step 650 an extraction pattern of data types is formed, where the extraction pattern is formed from the data type of the selected data field and the data type for at least one additional data field following the selected data field in the reference record. Besides the data type of the selected data field, typically at least the data field immediately following the selected data field is considered in the pattern. Next, in step 660 it is checked

whether the extraction pattern is disjoint to all segments in the preceding pattern, where each segment has the same length as the extraction pattern. In case the preceding pattern is longer than the extraction pattern, segments in the preceding pattern having the same length as the extraction pattern are used for comparison. If all segments are disjoint to the extraction pattern, the optimized extraction pattern is formed in step 680 and the method is ended in step 690. Otherwise, another extraction pattern is formed in step 670 by inserting the last expression in the preceding pattern at the beginning of the extraction pattern. By doing this, the length of the extraction pattern is incremented by 1. After this, the processor again checks in step 660 whether the newly formed extraction pattern is disjoint to all segments in the preceding pattern. If this is the case, the optimized extraction pattern is formed in step 680 and the method is ended. If not, another iteration is started with forming a new extraction pattern in step 670 and step 660 checks again whether the newly formed extraction pattern is disjoint to all segments in the preceding pattern. If this is the case, the optimized extraction pattern is formed in step 680 and the method is ended.

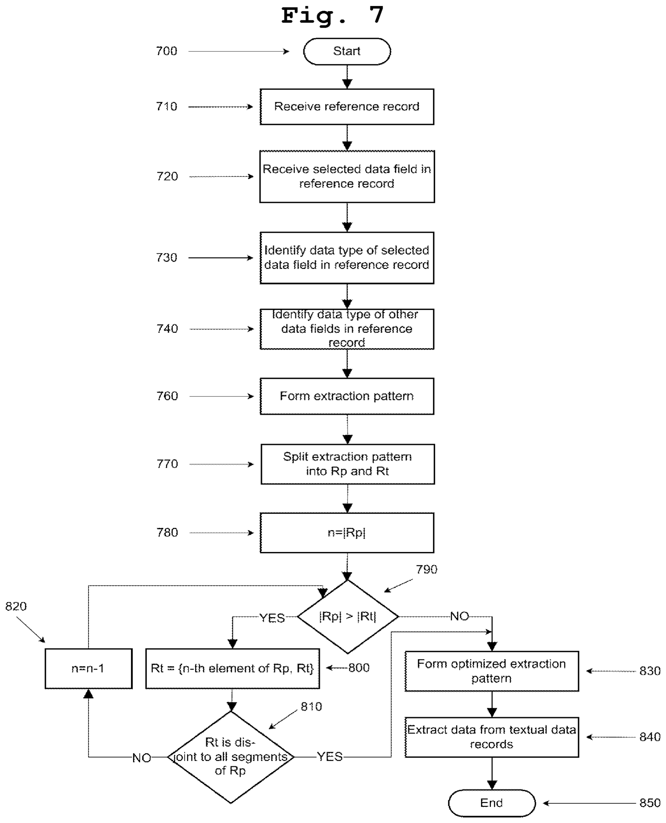

Next, the main steps performed by the computer-implemented method for extracting data from textual records according to claim 8 are shown in Fig. 7. After the start 700 of the method, in step 710 a reference record is received by the computer processor. The reference record may, e.g., be input by a user or received from another application. In step 720, the processor receives a selection of a data field in the reference record. Selecting a data field may be done by a pointing device, for example. In step 730, the data type of the selected data field is identified, e.g., by comparing the format of the selected data field with a predefined list of formats of data types. Likewise, the data types of other data fields in the reference record are identified in step 740. Next, in step 760 an extraction pattern for extracting the selected field from the reference record is formed. In step 770, the extraction pattern is split into a preceding portion Rp and a trailing portion Rt. Next, in step 780 the length of Rp is assigned to the variable n. In step 790 it is checked whether n, i.e. the length of Rp, is greater than the length of Rt. If this is the case, the n-th element of Rp is inserted at the beginning of Rt in step 800 thereby incrementing the length of Rt by 1. In 810, it is checked whether Rt is disjoint to all segments Rc of Rp. If all segments Rc are disjoint to Rt, an optimized extraction pattern is formed in step 830 and data is extracted from textual records by applying the optimized extraction pattern to the textual records in step 840. After this, the method ends with step 850. If, however, at least one segment Rc of Rp is not disjoint to Rt, n is decremented by 1 and another iteration starts with step 790.

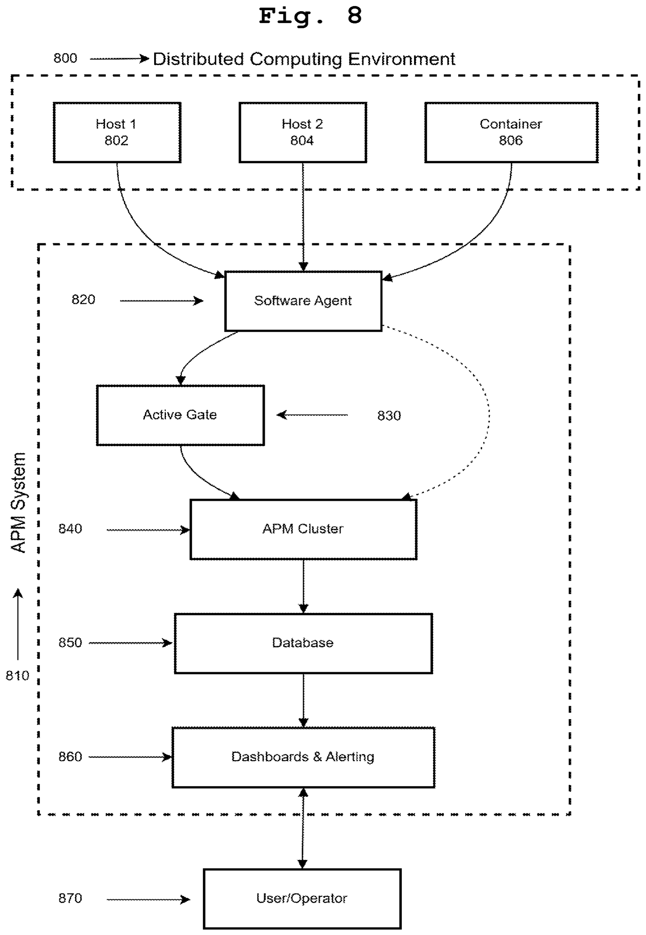

Finally, Fig. 8 schematically illustrates the collection of textual records of APM data by an APM system 810 in a distributed computing environment 800. The APM system 810 utilizes software agents 820 installed on hosts such as servers 802, 804, virtual machines, and containers 806 within the computing environment 800. The software agents 820 automatically instrument applications, services, processes and infrastructure components in the computing environment 800, thereby automatically collecting log data, metrics data, span- and trace-data etc. The software agents 820 auto-instrument code at runtime (e.g., Java, .NET, Node.js) such that method calls, database queries, and external service calls are captured without requiring manual code modifications. In addition, software agents 820 inject trace identifiers to requests, such as http requests, traversing the distributed computing environment 800, and propagate context information, enabling end-to-end transaction visibility for operations at different stages in the distributed computing environment 800. The software agents 820 can be proprietary agents or based on open-source solutions, such as OpenTelemetry.

The collected records of APM data are securely transmitted to the APM cluster 840, which may be implemented as a software-as-a-service (SaaS) or managed solution. The APM system 810 may comprise an optional Active Gate 830 that serves as a proxy to enable secure and scalable data transmission, particularly in hybrid or cloud-based configurations. The APM cluster 840 functions as a central backend for ingesting, indexing, analyzing, and storing APM data. Log data is e.g., stored in both raw and aggregated form in a scalable database 850.

Users 870 can query, visualize, and analyze APM data via dashboards, charts, and query language (e.g., DQL). The APM system 810 continuously analyzes textual records of APM data for anomalies, and patterns in order to trigger alerts. The dashboard and alerting component 860 provides a user interface for visualization, querying, and alerting. The APM system 810 correlates metrics-, log-, trace-, and log-data across services and infrastructure using entity identifiers and tags. The architecture is designed to handle millions of metrics per second across thousands of hosts and services.

In summary, the APM system 810 collects textual records of APM data from the distributed computing environment 800 by deploying software agents 820 that instrument applications and infrastructure, aggregate log data with contextual information, transmit log data to a central backend 840, and store them in a database 850 for subsequent analysis, visualization, and alerting 860. The system is designed to provide high scalability, resilience, and deep observability across complex, distributed environments.

The collection of textual records of APM data shown in Fig. 8 supports understanding the technical problem identified in this disclosure -namely, the difficulty of generating robust extraction patterns from heterogeneous textual records such as APM data. The steps in this disclosure include receiving a reference record, identifying data types, forming and iteratively optimizing an extraction pattern, and applying the optimized pattern to extract fields from multiple records. This process is not a mere abstract idea; it is tailored for APM systems that improve the functioning of computer systems by automating pattern generation and reducing computational complexity compared to manual approaches. By implementing these steps on a computer, the invention achieves a practical application-accurate and efficient extraction of data from logs, metrics, traces, and other APM records.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

**1.** A computer-implemented method for extracting data from textual records, comprising:

a) receiving, by a computer processor, a reference record;
b) receiving, by the computer processor, a selection of a data field in the reference record;
c) identifying, by the computer processor, data types of data fields comprising the reference record;
d) forming, by the computer processor, a preceding pattern of data types, where the preceding pattern is formed from the data types of the data fields preceding the selected data field in the reference record;
e) forming, by the computer processor, an extraction pattern of data types, where the extraction pattern is formed from the data type of the selected data field and data types for at least one additional data field following the selected data field in the reference record;
f) determining, by the computer processor, whether the extraction pattern is disjoint to all segments of the preceding pattern, where each segment is comprised of sequential data types in the preceding pattern and has same length as the extraction pattern;
g) inserting, by the computer processor, the data type for last data field in the preceding pattern at the beginning of

the extraction pattern to form a new extraction pattern;
h) repeating steps f) and g) with the new extraction pattern until a determination is made that the new extraction pattern is disjoint to all segments comprising the preceding pattern; and
i) forming an optimized extraction pattern from the new extraction pattern in response to a determination that the new extraction pattern is disjoint to any segment comprising the preceding pattern.

**2.** The method of claim 1 further comprises receiving a plurality of text records and extracting data from the plurality of text records using the optimized extraction pattern.

**3.** The method according to any one of the preceding claims, wherein identifying data types of data fields comprise identifying a data type for each field starting with a first data field in the reference record to a data field immediately following the selected data field.

**4.** The method according to any one of the preceding claims, wherein identifying data types of data fields includes matching data fields in the reference record and assigning a data type to a given data field in the reference record, where the assigned data type is selected from a predefined list of data types.

**5.** The method according to any one of the preceding claims, wherein forming a preceding pattern of data types includes concatenating data types together in order of occurrence in the reference record starting with a first data field to the selected data field.

**6.** The method according to any one of the preceding claims, wherein determining whether the extraction pattern is disjoint to any segment of the preceding pattern includes comparing sequence of data types comprising the extraction pattern to sequence of data types comprising each segment in the preceding pattern.

**7.** The method according to any one of the preceding claims, wherein forming an optimized extraction pattern by prepending a wildcard expression to the new extraction pattern, where the wildcard expression is a universal data type with an arbitrary length.

**8.** A computer-implemented method for extracting data from textual records, comprising:

- receiving, by a computer processor, a reference record;
- receiving a selection for a selected data field in the reference record;
- identifying, by the computer processor, the data type of the selected data field;
- for each other data field in the reference record from the first data field to the data field preceding the selected data field, and for the data field immediately following the selected data field: identifying, by the computer processor, the data type of the other data field;
- forming, by the computer processor, an extraction pattern, ExPat, by concatenating the identified data types in order of occurrence in the reference record;
- splitting the extraction pattern, ExPat, into a first part, Rp, and a second part, Rt, where the first part, Rp, comprises data types from the beginning of the extraction pattern to the data type of the data field preceding the selected data field, and the second part, Rt, comprises the remaining data types in the extraction pattern, ExPat;
- identifying the number of expressions in the first part, Rp, and assigning the number of expressions in the first part to n, n=|Rp|;
- if the first part, Rp, contains more expressions than the second part, Rt: reducing the length of the extraction pattern, ExPat, by iteratively performing:

  - inserting the n-th element of the first part, Rp, at the beginning of the second part, Rt, thereby incrementing the length of Rt by 1;
  - for all ordered subsets, Rc, of the first part, Rp, containing the same number of expressions as the second part, Rt: checking, by the computer processor, whether the subset, Rc, is disjoint to the second part, Rt;
  - if at least one subset, Rc, of the first part, Rp, is not disjoint to the second part, Rt: decrement n by 1, n = n-1, and perform the next iteration, else exit the iteration;

- forming, by the computer processor, an optimized extraction pattern, ExPat*, by concatenating DATA*, '(', Rt, and ')', where DATA* is a first expression of arbitrary length including zero having the universal data type DATA, and Rt comprises the ordered sequence of data types in the second part, Rt;
- for each textual data record: extracting data from the textual data record by applying the optimized extraction

pattern, ExPat*, to the textual data record.

**9.** The computer-implemented method according to claim 8 wherein identifying the data type of the selected data field further comprises: comparing the format of the selected data field to a table of formats of data types, where the comparison starts at the top of the table, and in case a format does not match, the next following entry in the table is checked.

**10.** The computer-implemented method according to claim 8 or 9 wherein identifying the data type of the selected data field includes: identifying whether the reference record contains a JSON object; if a JSON object is contained in the record, ascertaining whether the selected data field is contained in the JSON object; and if the selected data field is contained in the JSON object, assigning the data type JSON to the selected field.

**11.** The computer-implemented method according to any of claims 8 to 10, wherein identifying the data type of the selected data field includes: identifying whether the reference record contains a key-value-pair object, KVP; if a KVP object is contained in the record, ascertaining whether the selected data field is contained in the KVP object; and if the selected data field is contained in the KVP object, assigning the data type KVP to the selected field.

**12.** The computer-implemented method according to any of claims 8 to 11, wherein identifying the data type of the other data field further comprises: comparing the format of the other data field to a table of formats of data types, where the comparison starts at the top of the table, and in case a format does not match, the next following entry in the table is checked.

**13.** The computer-implemented method according to any of claims 8 to 12, wherein extracting data from the data record includes: if the extracted data is a JSON object or a KVP object, extracting a key-value pair from the JSON object or the KVP object.

**14.** The computer-implemented method according to any of claims 8 to 13, wherein extracting data from the data record includes: assigning the extracted data to a variable and storing the variable in a database.

**15.** A non-transitory computer-readable medium having computer-executable instructions that, upon execution of the instructions by a processor of a computer, cause the computer to

a) receive a reference record;
b) receive a selection of a data field in the reference record;
c) identify data types of data fields comprising the reference record;
d) form a preceding pattern of data types, where the preceding pattern is formed from the data types of the data fields preceding the selected data field in the reference record;
e) form an extraction pattern of data types, where the extraction pattern is formed from the data type of the selected data field and data types for at least one additional data field following the selected data field in the reference record;
f) determine whether the extraction pattern is disjoint to any segment of the preceding pattern, where each segment is comprised of sequential data types in the preceding pattern and has same length as the extraction pattern;
g) insert the data type for last data field in the preceding pattern at the beginning of the extraction pattern to form a new extraction pattern;
h) repeat steps f) and g) with the new extraction pattern until a determination is made that the new extraction pattern is disjoint to any segment comprising the preceding pattern; and
i) form an optimized extraction pattern from the new extraction pattern in response to a determination that the new extraction pattern is disjoint to any segment comprising the preceding pattern.

**Fig. 1**

100 →

| Record | Content |
|---|---|
| R1 | ‘2023-09-24 16:43:59 4.39.237.73 "Mozilla/5.0 (X11; Linux x86_64; rv:102.0) 020 " 200 10348’ |

| Record | Content |
|---|---|
| R2 | ‘2023-09-24 16:43:59 4.39.237.73 "curl/7.54.1 254 " 404 149’ |
| R3 | ‘2023-09-24 16:43:59 example.com "curl/7.54.1 254 " 304 2583’ |
| R4 | ‘2023-09-24 16:43:37 "curl/7.54.1 254 " 200 10342’ |

**Fig. 1a**

100
2023-09-24 16:43:59 4.39.237.73 "Mozilla/5.0 (X11; Linux
x86_64; rv:102.0) 020 " 200 10348
110
120

**Fig. 2**

| Record | Content |
|---|---|
| R10 | ‘2024-01-08 14:23:56;localhost;200;23198;"/public/v1/example"’ |

**Fig. 3**

300 →

| Record | Content |
|---|---|
| R20 | ‘2024-01-08 14:23:56 {"first name": "Homer", "surname": "Simpson", "age": 43} 200’ |

Fig. 3a

300
2024-01-08 14:23:56 {"first name": "Homer", "surname":
"Simpson", "age": 43} 200
310
120

Fig. 4

400
"first name": "Homer"
"surname": "Simpson"
"age": 43
410

Fig. 5

| Record | Content |
|---|---|
| R30 | '2024-01-08 14:23:56 a=1.7&b=2&C=woohoo&d=false 200' |

500

Fig. 5a

500
2024-01-08 14:23:56 a=1.7&b=2&C=woohoo&d=false 200
510
120

Fig. 6
600
Start
610
Receive reference record
620
Receive selected data field in reference record
630
Identify data types of data fields in reference record
640
Form preceding pattern
650
Form extraction pattern
660
Extraction pattern is disjoint to all segments of preceding pattern
NO
YES
670
Extraction pattern = {Last expression in preceding pattern, extraction pattern}
680
Form optimized extraction pattern
690
End

Fig. 7
700
Start
710
Receive reference record
720
Receive selected data field in reference record
730
Identify data type of selected data field in reference record
740
Identify data type of other data fields in reference record
760
Form extraction pattern
770
Split extraction pattern into Rp and Rt
780
n=|Rp|
790
|Rp| > |Rt|
YES
NO
820
n=n-1
Rt = {n-th element of Rp, Rt}
800
810
Rt is dis-joint to all segments of Rp
NO
YES
Form optimized extraction pattern
830
Extract data from textual data records
840
End
850

# Fig. 8

800
Distributed Computing Environment
Host 1
802
Host 2
804
Container
806
820
Software Agent
Active Gate
830
APM System
840
APM Cluster
850
Database
810
860
Dashboards & Alerting
870
User/Operator

Europäisches
Patentamt
European
Patent Office
Office européen
des brevets

# EUROPEAN SEARCH REPORT

Application Number
EP 26 15 3898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/154269 A1 (MILLER JESSE [US] ET AL) 4 June 2015 (2015-06-04)<br>* abstract; figures 4,8-9,13A-13B, 15A-15B *<br>* paragraph [0130] *<br>* paragraph [0153] - paragraph [0168] *<br>* paragraph [0215] *<br>* paragraph [0293] - paragraph [0296] *<br>----- | 1-15 | INV.<br>G06F16/2455<br>G06F16/25 |
| A | US 8 909 642 B2 (SPLUNK INC [US]) 9 December 2014 (2014-12-09)<br>* abstract; figures 5-7 *<br>* column 16, line 52 - line 67 *<br>* column 17, line 15 - column 18, line 24 *<br>----- | 1-15 | |

TECHNICAL FIELDS SEARCHED (IPC)

G06F

The present search report has been drawn up for all claims

| Place of search | Date of completion of the search | Examiner |
|---|---|---|
| Berlin | 8 April 2026 | Nazzaro, Antonio |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 3898

This annex lists the patent family members relating to the patent documents cited in the above-mentioned European search report. The members are as contained in the European Patent Office EDP file on The European Patent Office is in no way liable for these particulars which are merely given for the purpose of information.

08-04-2026

| Patent document cited in search report | Publication date | Patent family member(s) | Publication date |
| --- | --- | --- | --- |
| US 2015154269 A1 | 04-06-2015 | US 2015154269 A1 | 04-06-2015 |
| | | US 2017139887 A1 | 18-05-2017 |
| US 8909642 B2 | 09-12-2014 | NONE | |

EPO FORM P0459

For more details about this annex : see Official Journal of the European Patent Office, No. 12/82